# EUROPEAN PATENT SPECIFICATION

(11) **EP 2 971 981 B1**
(45) Date of publication and mention of the grant of the patent: **03.05.2017**
(21) Application number: 14721495.1
(22) Date of filing: 13.03.2014
(51) Int. Cl.: F24D 11/00, F24D 19/10

(54) **CONTROL METHOD FOR A HOUSEHOLD WATER HEATING UNIT HAVING A THERMAL ACCUMULATOR**
STEUERUNGSVERFAHREN FÜR EINE BRAUCHWASSERHEIZVORRICHTUNG MIT EINEM WÄRMESPEICHER
PROCÉDÉ DE COMMANDE DESTINÉ À UNE UNITÉ DE CHAUFFAGE DE L'EAU SANITAIRE AYANT UN ACCUMULATEUR DE CHALEUR

(30) Priority: 13.03.2013 IT TO20130198
(43) Date of publication of application: 20.01.2016
(73) Proprietor: Adsum S.r.l., San Benedetto Del Tronto (AP) (IT)
(72) Inventor: DE ANGELIS, Cristiano, 63074 San Benedetto del Tronto (IT); LOLLI, Sergio, San Benedetto Del Tronto (IT)
(74) Representative: Mola, Edoardo
(86) International application number: PCT/IB2014/059751
(87) International publication number: WO 2014/141146

(56) References cited:
- EP-A2- 2 275 748
- EP-A2- 2 416 073
- DE-A1- 19 846 364

## Description

### TECHNICAL FIELD

The present invention relates to a method for regulating a heating unit, in particular for household water, comprising a thermal accumulator.

### BACKGROUND ART

The need to control the heating of household water to reduce energy consumption without reducing the comfort level for the user is felt. In particular, hot water use can be highly discontinuous during the day, during the week according to working or non-working days, and throughout the year according to the seasons. It is preferable to optimize energy consumption, while ensuring that the amount of hot water required by the user is always available, even during periods of peak demand. The hot water generated by the heating unit is supplied as water for sanitary facilities such as domestic bathrooms, as well as in sports facilities or gyms, and for recreational facilities such as swimming pools, hot tubs or recreational stations with heated water basins. More generally, all uses for which the maximum temperature of the hot water leaving the heating unit does not exceed 70°C can be considered.

A thermal accumulator is a fluid reservoir having a specific heat in order to store thermal energy which is transferred to heat the water directed to the end user.

DE-A1-19846364 discloses a control method for a household water heating system comprising an accumulator and temperature sensors to detect the vertical temperature gradient within the accumulator. The known system is coupled to a solar collector and further comprises a heat power source to heat water in addition to the solar collector. The control of the known household water heating system can be improved in particular when the heat power source is switched off.

### DISCLOSURE OF INVENTION

It is the object of the present invention to provide a method for controlling a household water heating unit at least partially capable of satisfying the requirements specified above.

The object of the present invention is achieved by a method according to claim 1.

### BRIEF DESCRIPTION OF THE DRAWINGS

The invention will now be described with reference to the accompanying drawings, which show non-limiting embodiments thereof and refer:
- Figure 1: to a functional diagram of a household water heating unit according to the present invention; and
- Figure 2: to a functional diagram according to a further embodiment of the present invention.

### BEST MODE FOR CARRYING OUT THE INVENTION

In the figures, numeral 1 illustrates as a whole a heating unit comprising a heat generator 2, a thermal accumulator 3 and a heat exchanger 4, fluidly connected to one another by respective recirculation circuits 5' and 5".

The heat generator 2 comprises a heat exchanger 20 for transferring thermal power Q1 from a primary branch P1 towards a secondary branch 31 connected to the recirculation circuit 5' and, optionally, to a boiler connected to the primary branch 21. The boiler can provide the thermal power Q1 transferred to the fluid of the recirculation circuit 5', or the latter can be supplied by a thermal power transport network, e.g. a district heating network or similar, provided with a regulation unit for the flow entering the primary branch P1.

The thermal accumulator 3 has a vertical structure to allow thermal stratification of the carrier fluid circulating in circuits 5' and 5". The carrier fluid is stratified on the basis of the vertical thermal gradient within the thermal accumulator 3, and the colder layers are in the lower zone, while those at higher temperatures are in the upper zone. The secondary branch S1 of the heat exchanger 20 is preferably connected at its outlet via a duct 6 to a head zone 7 of the thermal accumulator 3 so that the heated carrier fluid enters the hottest layer of the thermal accumulator 3. The recirculation circuit 5' also comprises an outlet duct 8 for connecting the bottom 9 of the thermal accumulator 3 to the inlet of the secondary branch S1 of the heat exchanger 20. The carrier fluid flow from the thermal accumulator 3 towards the secondary branch S1 of the heat exchanger 20 is controlled by a valve D placed on duct 8. In use, the valve D which has a discrete placement sends either fluid taken from the bottom 9 or fluid taken from an intermediate zone I of the thermal accumulator 3 to the heat exchanger 20.

In order to detect the thermal gradient in the vertical direction, temperature sensors are included, e.g. three sensors S1', S2', S3' mounted for detecting the fluid temperature inside the thermal accumulator 3 at three different vertical heights, close to the bottom 9, close to the head zone 7 and in the intermediate zone I, for example.

The head zone 7 feeds the heat exchanger 4 by means of the recirculation circuit 5". The recirculation circuit 5" has a ring controlled by means of a solenoid valve 11, for recirculating the carrier fluid in a primary branch P2 of the heat exchanger 4. A secondary branch S2 of the heat exchanger 4 is connected to an end user through an inlet pipe 12 and an outlet pipe 13. The inlet of the solenoid valve 11 is connected to the head zone 7 and to the bottom 9 via respective ducts 14 and 15. An outlet of the solenoid valve 11 is connected to the primary branch P2. An electric pump 16 is also provided in the recirculation circuit 5", downstream of the solenoid valve 11.

The solenoid valve 11 carries out the function of mixing fluid from the bottom 9 with fluid from the head zone 7 of the thermal accumulator 3. The solenoid valve 11 is controlled so as to maintain the temperature on the plates of the heat exchanger 4 at a temperature lower than 63°C. The electric pump 16 imposes a depression upstream of itself and, by means of the solenoid valve 11, the extraction is carried out from two zones of the thermal accumulator 3, which potentially have different temperatures: lower at the bottom 9 and higher at the head zone 7.

Furthermore, the heating unit 1 comprises sensors M in order to measure temperature T and flow F on duct 13, for detecting the hot water request by the end user, and verifying the temperature at which this water is supplied. Such a temperature is a function of the thermal power Q2 transferred from the primary branch P2 to the secondary branch S2 of the heat exchanger 4.

According to the present invention, the heating unit 1 further comprises a control unit C for operating the electric pump 16 and the solenoid valves D, 11 on the basis of the signals of sensors 51', S2', S3', T, F, so as to achieve an energy management strategy referred to as 'Energy Management System - EMS'.

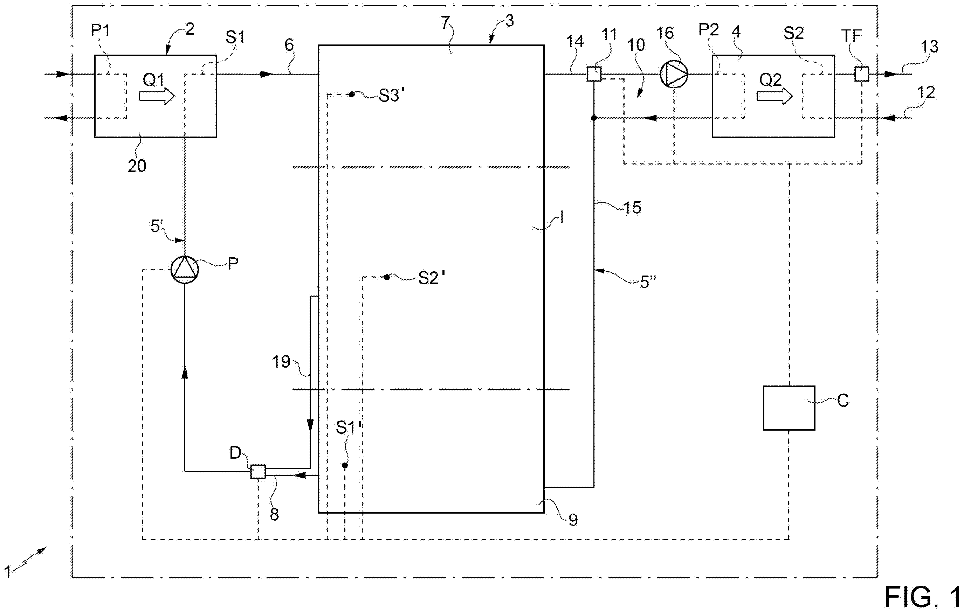

In particular, the control unit C is programmed according to a first operation mode where the fluid temperature in the thermal accumulator 3 is that resulting from using the heat generator 2 in the maximum efficiency zone. For example, if the heat generator 2 is associated with a condensing boiler, and the heat exchanger 20 is designed for a temperature difference of 15°C, the temperature in the intermediate zone I, corresponding to sensor S2' (Figure 1), is maintained at about 55°C. The electric pump 16 and the solenoid valves 11, D are then set for controlling a circulating flow in the recirculation circuits 5', 5" so that this condition is maintained. In particular, sensor S2 is positioned so that the detected temperature is indicative of that of the fluid sent to valve D through duct 19. By means of a fluid temperature at the inlet lower than 55°C in the secondary branch S1 of the heat exchanger 20, a maximum efficiency is obtained if such a heat exchanger is associated with a condensing boiler.

Moreover, the control unit C is programmed according to a further operation mode so that the temperature measured by sensors S1' and S3' (with reference to Figure 1) is equal, with a deviation of +/- 3°C, i.e. that the gradient tends to zero. In particular, the temperature is predetermined at a value higher than that measured by sensor S2 in the first operation mode. Preferably, this temperature is 75°C. When the heat exchanger 4 is a plate heat exchanger, a carrier fluid temperature of 75°C in the thermal accumulator 3 maintains the plates of the heat exchanger 4 at a temperature lower than 63°C so as to avoid depositing of salts and other encrusting agents, which reduce the efficiency of the exchanger itself. Such an effect is achieved by a specific temperature measurement and by the action of the control unit C, which then mixes colder fluid from the bottom 9 with warmer fluid from the head zone 7, by means of the solenoid valve 11.

When the temperature of the bottom 9 and of the head zone 7 has to be changed, via the electric pump P and the valve D, the control unit C sends the flow of carrier fluid to be heated to the secondary branch S1 of the heat exchanger 20. Simultaneously, the control unit C controls the ignition of the boiler which feeds the primary branch P1 of the heat exchanger 20.

When the control unit C switches from the second operation mode to the first operation mode, the temperature detected by S2' must decease. For this purpose, the control unit C is configured, for example, to monitor the temperature of S2' so that the thermal losses impose the decrease in temperature.

Preferably, the electric pump 16 has a fixed cubic capacity, and the temperature control is carried out in a discrete manner by means of specific activation/ deactivation cycles.

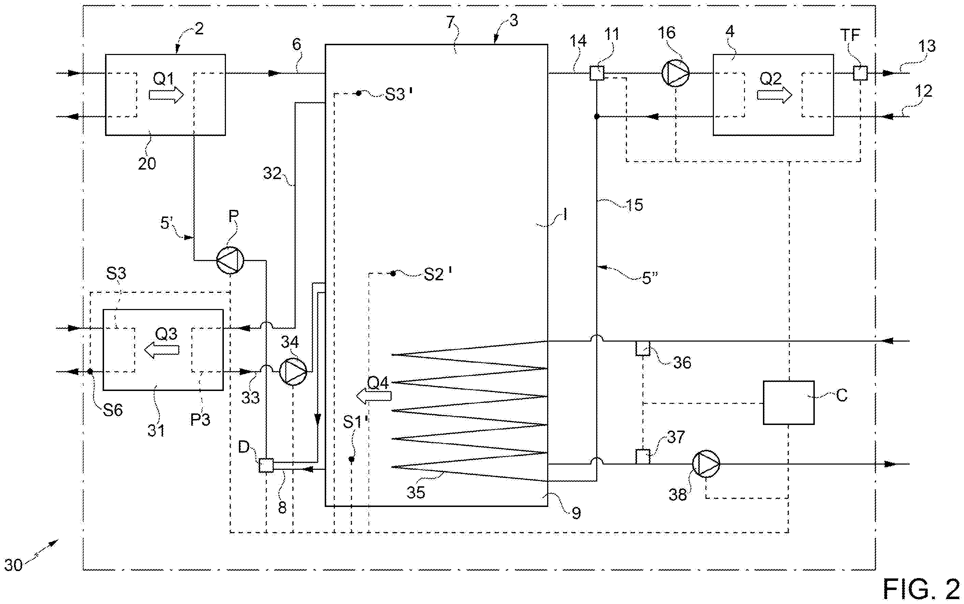

According to the embodiment shown in Figure 2, a heating unit 30 comprises the same elements described with reference to unit 1, with the following additions.

The heating unit 30 may comprise a heat exchanger 31 having a primary branch P3 connected at its inlet to the head zone 7 and at its outlet to the intermediate portion I of the thermal accumulator 3 via respective ducts 32, 33. An electric pump 34 dedicated to the heat exchanger 31 regulates the flow in the primary branch P3. The secondary branch S3 of the heat exchanger 31 receives the heat Q3 and is adapted to be connected to a user of hot water with intermediate temperature, such as a small swimming pool or a hot tub. This intermediate temperature is lower than that at the outlet in duct 13.

The heating unit 30 may also comprise, in combination or as an alternative to exchanger 31, a coil 35 provided inside the thermal accumulator 3 and extending in the vertical direction from the bottom 9, and below the vertical position of sensor S2. Coil 35 heats the carrier fluid by means of the thermal power generated by a system from renewable sources, such as a thermal solar system. The inlet and outlet temperatures of a further carrier fluid conveyed through coil 35 are measured by respective sensors 36 and 37, and the circulating flow in the coil is controlled by an electric pump 38.

In use, coil 35 can heat the fluid at S1', by means of the heat Q4, to pass temperatures of 55°C detected by S2 in the first operation mode of the control unit C. In this case, it must be considered that the fluid, at these temperatures, can have very high thermal gradients . Therefore, in this case, the control unit C can send the fluid from the bottom 9 to the head zone 7, by means of the actuation of the electric pump P and the solenoid valve D, without having to turn on the boiler connected to the heat exchanger 20. In this case, the heat production due to the thermal solar system is retained within the thermal accumulator 3 in order to maintain a relatively low temperature at the intermediate zone. Furthermore, the control unit C is programmed to only turn on the boiler connected to the primary branch of the heat exchanger 20 when the heat from the thermal solar system is no longer sufficient to meet the temperatures of the first operation mode.

In relation to the control of the heat exchanger 31, the temperature in the secondary outlet branch towards the user, e.g. a small swimming pool or hot tub, is such that it is lower than that measured by sensor S2 in the first operation mode, e.g. 35°C. The control unit C controls such a temperature through the actuation of the electric pump 34 and a specific temperature sensor S6.

Furthermore, the control unit C has a timer to automatically switch from the first to the second operation mode, for example, based on the schedule according to predetermined day/night cycles and/or working/non-working days and/or seasonal cycles. Thereby, the transients for the transition from the first to the second operation mode are anticipated with respect to the actual expected request of the user, so that the response of the heating unit 1, 30 is quicker. For example, if the heating unit 1, 30 is connected to a system for a gym changing room, the control unit C can be programmed to switch to the second operation mode, for example from 4:00pm to 9:00pm, when there is a predictable peak demand for continuous hot water for showers.

According to a preferred embodiment of the present invention, the heating unit 1 is mounted on a frame in order to define a transportable, easily-installable module. The ducts defining the primary branch P1 of the heat exchanger 20, the secondary branch S2, S3 of the heat exchangers 4 and 31, and the connection to coil 35 are provided with releasable connections, for example with flanges, in order to be connected to their: thermal power supply ducts, for example by means of a condensing boiler; users requiring elevated temperatures, such as for showers; users requiring lower temperatures, such as for hot tubs; and thermal solar systems.

The recirculation circuits 5', 5" define a closed circuit where the carrier fluid can be water with suitable additives to prevent corrosion or depositing of salts during operation over the various temperature ranges.

The temperature sensors S1', S2', S3' sample the temperature at intervals, e.g. every 0.25s, and have a precision within a fraction of a degree centigrade, e.g. 0.5°C.

## Claims

1. Control method for a household water heating unit (1; 30) comprising a first heat exchanger (20) connectable to a thermal power source (Q1), a second heat exchanger (4) connectable to a household hot water system, a thermal accumulator (3) connected by means of a fluidic circuit (5', 5") to said first and second heat exchangers (20, 4), a plurality of temperature sensors (S1', S2', S3') for measuring the vertical thermal gradient in said thermal accumulator (3), a valve (D) arranged on said fluidic circuit (5', 5") and having an outlet connected to a secondary branch (S1) of said first exchanger (20) and two inputs connected respectively to a lower zone (9) and to an intermediate zone (I) of said thermal accumulator (3), and a pump (P) arranged downstream of said valve (D), said control method comprising the steps of:
- controlling the vertical thermal gradient in said thermal accumulator (3) by means of said temperature sensors (S1', S2', S3'); and
- either switching said valve (D) into a first mode to connect said lower zone (9) with an upper zone (7) of said thermal accumulator (3) by means of a branch (S1) of said circuit (5', 5") passing through said first heat exchanger (20) and
- maintaining said thermal power source (Q1) active and controlling said pump (P) until the gradient detected by means of said temperature sensors (S1', S2', S3') returns to zero and the fluid in said thermal accumulator converges towards a first predetermined temperature;
- or switching said valve (D) into a second mode and switching off said thermal power source (Q1) to send to said first exchanger (20) fluid having a second predetermined temperature lower than said first predetermined temperature;

2. The method according to Claim 1, **characterised by** said switching step comprising the step of switching discretely and said controlling step comprising the step of controlling discretely, said pump (P) having constant cubic capacity.

3. The method according to any one of the previous Claims, **characterised by** comprising the step of automatically selecting between the steps of switching in the first mode or switching in the second mode on the basis of a timer.

4. The method according to any one of the previous Claims, wherein said generation unit comprises a second valve (11) having a first input connected to said upper zone (7), a second input connected to said lower zone (9) and an output connected to a primary branch (P2) of said second heat exchanger (4) and comprising the step of continually regulating said second valve (11) to maintain the temperature of the fluid entering said second heat exchanger below a further predetermined value.

5. The method according to any one of the previous Claims, **characterised by** comprising the step of measuring said second predetermined temperature at said intermediate zone (I) by means of one of said sensors (S2'),

6. The method according to any one of the precious Claims, **characterised by** said water heating unit (30) comprising a coil (35) housed in said thermal accumulator (3) starting from said lower zone (9) and designed to be connected to a solar heat system.

7. The method according to any one of the previous Claims, **characterised by** said heating unit (30) comprising a third heat exchanger (31) having a further primary branch (P3) connected in input to said upper zone (9) and in output to said intermediate zone (I), and a further secondary branch (S3) connectable to an external use, a second pump (34) being arranged on said further primary branch (P3) and being activated until a water temperature to said user is lower than the temperature in output from said second heat exchanger (4).

## Patentansprüche

1. Steuerungsverfahren für eine Brauchwasserheizvorrichtung (1; 30), die aufweist: einen ersten Wärmetauscher (20), der mit einer Wärmeleistungsquelle (Q1) verbindbar ist, einen zweiten Wärmetauscher (4), der mit einem Brauchwarmwassersystem verbunden ist, einen Wärmespeicher (3), der mit Hilfe eines Fluidkreises (5', 5") mit den ersten und zweiten Wärmetauschern (20, 4) verbunden ist, mehrere Temperatursensoren (S1', S2', S3') zum Messen des vertikalen Wärmegradienten in dem Wärmespeicher (3), ein Ventil (D), das auf dem Fluidkreis (5', 5") eingerichtet ist und einen Auslass mit einem Sekundärzweig (S1) des ersten Wärmetauschers (20) verbunden hat, und zwei Eingänge jeweils mit einer unteren Zone (9) und mit einer Zwischenzone (I) des Wärmespeichers (3) verbunden hat, und eine Pumpe (P), die strömungsabwärtig von dem Ventil (D) eingerichtet ist, wobei das Steuerungsverfahren die folgenden Schritte aufweist:
- Steuern des vertikalen Wärmegradienten in dem Wärmespeicher (3) mit Hilfe der Temperatursensoren (S1', S2', S3'); und
- entweder Schalten des Ventils (D) auf eine erste Betriebsart, um die untere Zone (9) mit Hilfe eines Zweigs (S1) des Kreislaufs (5', 5"), der durch den ersten Wärmetauscher (20) geht, mit einer oberen Zone (7) des Wärmespeichers (3) zu verbinden, und
- Aktivhalten der Wärmeleistungsquelle (Q1) und Steuern der Pumpe (P), bis der Gradient, der mit Hilfe der Temperatursensoren (S1', S2', S3') erfasst wird, zu null zurückkehrt und das Fluid in dem Wärmespeicher in Richtung einer ersten vorgegebenen Temperatur konvergiert;
- oder Schalten des Ventils (D) auf eine zweite Betriebsart und Ausschalten der Wärmeleistungsquelle (Q1), um Fluid mit einer zweiten vorgegebenen Temperatur, die niedriger als die erste vorgegebene Temperatur ist, zu dem ersten Wärmetauscher (20) zu befördern.

2. Verfahren nach Anspruch 1, **dadurch gekennzeichnet, dass** der Schaltschritt den Schritt des getrennten Schaltens aufweist und der Steuerungs schritt den Schritt des getrennten Steuerns der Pumpe (P) mit konstantem Hubvolumen aufweist.

3. Verfahren nach einem der vorhergehenden Ansprüche, **dadurch gekennzeichnet, dass** es den Schritt des automatischen Auswählens zwischen den Schritten zum Schalten auf die erste Betriebsart oder zum Schalten auf die zweite Betriebsart auf der Basis einer Zeitbegrenzung aufweist.

4. Verfahren nach einem der vorhergehenden Ansprüche, wobei die Erzeugungseinheit ein zweites Ventil (11) mit einem ersten Eingang, der mit der oberen Zone (7) verbunden ist, einem zweiten Eingang, der mit der unteren Zone (9) verbunden ist, und einem Ausgang, der mit einem Primärzweig (P2) des zweiten Wärmetauschers (4) verbunden ist, aufweist, und das den Schritt des fortlaufenden Regulierens des zweiten Ventils (11) aufweist, um die Temperatur des Fluids, das in den zweiten Wärmetauscher eintritt, unterhalb eines weiteren vorgegebenen Werts zu halten.

5. Verfahren nach einem der vorhergehenden Ansprüche, **dadurch gekennzeichnet, dass** es den Schritt des Messens der zweiten vorgegebenen Temperatur in der Zwischenzone (I) mit Hilfe eines der Sensoren (S2') aufweist.

6. Verfahren nach einem der vorhergehenden Ansprüche, **dadurch gekennzeichnet, dass** die Wasserheizvorrichtung (30) eine Spule (35) aufweist, die in dem Wärmespeicher (3) aufgenommen ist, die von der unteren Zone (9) beginnt und konzipiert ist, um mit einem Solarheizsystem verbunden zu werden.

7. Verfahren nach einem der vorhergehenden Ansprüche, **dadurch gekennzeichnet, dass** die Heizvorrichtung (30) aufweist: einen dritten Wärmetauscher (31) mit einem weiteren Primärzweig (P3), der im Eingang mit der oberen Zone (9) verbunden ist und im Ausgang mit der Zwischenzone (I) verbunden ist, und einen weiteren Sekundärzweig (S3), der für eine externe Verwendung verbindbar ist, und eine zweite Pumpe (34), die auf dem weiteren Primärzweig (P3) eingerichtet ist und aktiviert wird, bis eine Wassertemperatur für den Benutzer niedriger als die Temperatur im Ausgang von dem zweiten Wärmetauscher (4) ist.

## Revendications

1. Procédé de commande d'une unité de chauffage d'eau sanitaire (1 ; 30) comprenant un premier échangeur de chaleur (20) pouvant être relié à une source d'énergie thermique (Q1), un deuxième échangeur de chaleur (4) pouvant être relié à un système d'eau chaude sanitaire, un accumulateur de chaleur (3) relié au moyen d'un circuit de fluide (5', 5") auxdits premier et deuxième échangeurs de chaleur (20, 4), une pluralité de capteurs de température (S1', S2', S3') pour mesurer le gradient thermique vertical dans ledit accumulateur de chaleur (3), une vanne (D) disposée dans ledit circuit de fluide (5', 5") et ayant une sortie reliée à une branche secondaire (S1) dudit premier échangeur (20) et deux entrées reliées respectivement à une zone inférieure (9) et à une zone intermédiaire (I) dudit accumulateur de chaleur (3), et une pompe (P) disposée en aval de ladite vanne (D), ledit procédé de commande comprenant les étapes consistant à :
- commander le gradient thermique vertical dans ledit accumulateur de chaleur (3) au moyen desdits capteurs de température (S1', S2', S3') ; et
- soit commuter ladite vanne (D) dans un premier mode pour relier ladite zone inférieure (9) à une zone supérieure (7) dudit accumulateur de chaleur (3) au moyen d'une branche (S1) dudit circuit (5', 5") passant par ledit premier échangeur de chaleur (20) et
- maintenir ladite source d'énergie thermique (Q1) active et commander ladite pompe (P) jusqu'à ce que le gradient détecté au moyen desdits capteurs de température (S1', S2', S3') revienne à zéro et que le fluide dans ledit accumulateur de chaleur converge vers une première température prédéterminée ;
- soit commuter ladite vanne (D) dans un deuxième mode et déconnecter ladite source d'énergie thermique (Q1) pour envoyer audit premier échangeur (20) du fluide ayant une deuxième température prédéterminée inférieure à ladite première température prédéterminée.

2. Procédé selon la revendication 1, **caractérisé en ce que** ladite étape de commutation comprend l'étape consistant à effectuer une commutation discrète et ladite étape de commande comprend l'étape consistant à effectuer une commande discrète, ladite pompe (P) ayant une capacité cubique constante.

3. Procédé selon l'une quelconque des revendications précédentes, **caractérisé en ce qu'**il comprend l'étape consistant à effectuer une sélection automatique entre les étapes de commutation dans le premier mode ou de commutation dans le deuxième mode sur la base d'un temporisateur.

4. Procédé selon l'une quelconque des revendications précédentes, dans lequel ladite unité de génération comprend une deuxième vanne (11) ayant une première entrée reliée à ladite zone supérieure (7), une deuxième entrée reliée à ladite zone inférieure (9) et une sortie reliée à une branche primaire (P2) dudit deuxième échangeur de chaleur (4), et comprenant l'étape consistant à réguler en continu ladite deuxième vanne (11) pour maintenir la température du fluide entrant dans ledit deuxième échangeur de chaleur en dessous d'une autre valeur prédéterminée.

5. Procédé selon l'une quelconque des revendications précédentes, **caractérisé en ce qu'**il comprend l'étape consistant à mesurer ladite deuxième température prédéterminée à ladite zone intermédiaire (I) au moyen d'un desdits capteurs (S2').

6. Procédé selon l'une quelconque des revendications précédentes, **caractérisé en ce que** ladite unité de chauffage d'eau (30) comprend une bobine (35) logée dans ledit accumulateur de chaleur (3) à partir de ladite zone inférieure (9) et conçue pour être reliée à un système de chauffage solaire.

7. Procédé selon l'une quelconque des revendications précédentes, **caractérisé en ce que** ladite unité de chauffage (30) comprend un troisième échangeur de chaleur (31) ayant une autre branche primaire (P3) reliée en entrée à ladite zone supérieure (9) et en sortie à ladite zone intermédiaire (I), et une autre branche secondaire (S3) pouvant être reliée à une utilisation externe, une deuxième pompe (34) étant disposée dans ladite autre branche primaire (P3) et étant activée jusqu'à ce qu'une température d'eau audit utilisateur soit inférieure à la température en sortie dudit deuxième échangeur de chaleur (4).
